# EUROPEAN PATENT SPECIFICATION

(11) **EP 1 074 187 B1**
(45) Date of publication and mention of the grant of the patent: **21.01.2004**
(21) Application number: 00306322.9
(22) Date of filing: 25.07.2000
(51) Int. Cl.: A23N 15/00, A23N 12/02, B26D 1/36, B26D 7/06

(54) **Simultaneous slicing and washing of vegetables**
Gleichzeitiges Schneiden und Waschen von Gemüse
Découpage et lavage simultanés des légumes

(30) Priority: 03.08.1999 US 366659
(43) Date of publication of application: 07.02.2001
(73) Proprietor: Heat and Control, Inc., Hayward, California 94545-1132 (US)
(72) Inventor: Caridis, Andrew A., San Carlos , CA 94070 (US); Silvester, John, Hayward , CA 94545 (US); Brown, Daniel E., California 94403 (US); Murgel, Leonardo P., San Francisco , CA 94123 (US); Beitsayadeh, Carl, CA 94132 (US)
(74) Representative: Tillbrook, Christopher John

(56) References cited:
- US-A- 4 251 895
- US-A- 4 549 478
- US-A- 5 694 824

## Description

### FIELD OF THE INVENTION

This invention is generally directed to the field of preparation of vegetable such as potatoes, plantains and the like prior to frying, baking or drying and more specifically relates to slicing a vegetable product to the desired thickness and simultaneously washing the sliced vegetable for removal of starch, ruptured cells and the like.

### BACKGROUND OF THE INVENTION AND PRIOR ART

In the process for the preparation of potato chips, for example, it is commonly found that the potatoes are treated to the gross removal of dirt from the whole potatoes. Then the potatoes may undergo skin removal in a peeler, although this is not always the case, and are then forwarded to a slicer which cuts the potatoes to the desired thickness, usually on the order of 0.60 inches thickness. In the slicing operation the potato body is penetrated by a metal blade which ruptures the vegetable cells and leaves a residue or film of starch and broken cells dispersed over the surfaces of the slices. The presence of the film is undesirable in subsequent processing steps such as frying or baking although for certain chip styles the presence of the film of starch is tolerated. However, washing the slices in a water bath is the common practical method of cleaning the starch and ruptured cell film from the slices. In that step, the slices are deposited into the water bath either directly from the slicer or from a conveyor belt which carries the slices from the slicer outlet located remotely from the bath. The bath for washing the slices may have agitation supplied therein to promote a vigorous action of the water upon the surfaces of the slices to achieve effective removal of the starch film. The washed slices were removed from the bath typically upon an inclined conveyor and when removed from the water were then subjected to an air blast to remove residual starch particles and water film from the surfaces of the slices. Thus prepared, the potato slices are advanced to additional processing steps leading toward the desired finished products, usually fully cooked chips.

French fried potatoes in preparatory processing steps undergo a step of cutting the whole potatoes into strips generally sized to resemble the finished fried product. A successful method of potato strip cutting has been to propel, such as by pumping, the potatoes in a fast moving charge of water against and through a fixed, cris-cross array of knives or other potato cutters. This splits the potatoes into strips in the presence of water employed to drive the vegetables through the knives or other cutters. See US Patents Nos. 5,042,342 to Julian assigned to Lamb-Weston, Inc. of Kennewick, WA. ; 5,168,784 to Foster et. al assigned to Universal Frozen Foods, Inc. of Twin Falls, Id.; and 5,179,881 to Frey et. al. assigned to McCain Foods Ltd. of Florenceville, Canada.

One important objective of this invention is to eliminate the separate washing step following slicing in vegetable processing through combining the slicing and washing step for efficient removal of starch film from the sliced pieces.

### SUMMARY OF THE INVENTION AND OBJECTS

In summary the invention resides in a process of simultaneously washing and slicing a raw vegetable such as potatoes, apples, sweet potatoes, cassava, plantains, beets, onions, water chestnuts, carrots, turnips, cabbage and sugar beets and the like, the process including the steps of providing a vat of washing water equipped with an inclined takeout conveyor positioned with its lower end submerged in the water and its upper end extending above the water surface, positioning a vegetable slicer with its supply inlet above the water surface and its slice discharge outlet positioned above the lower end of the takeout conveyor but below the water surface. The vegetables are supplied to the slicer inlet as it is operating so that the slices are discharged underwater serving to directly and forcefully clean the slice surfaces of dirt, starch and burst cells. The water is circulated in a current passing downwardly through the conveyor at a force such that the slices are attracted to and dispersed upon the conveyor which is operated to remove the slices from the water for further processing.

An object of the invention is to provide an improved process for the preliminary preparation of slice-able vegetables wherein the washing and slicing steps is undertaken simultaneously thereby effect a savings in processing time and equipment expense.

Another object of the invention is to provide an efficient combined processing step of slicing, washing and dispersing the washed slices on a takeout conveyor in an arrangement which minimizes slice overlap thereby reducing the tendency to form clumps of the sliced product in subsequent frying steps.

Yet another object of the invention is to provide for the substantially complete removal of slices from the slice washing bath irrespective of the vortexes or turbulence therein.

Still another object of the invention is to provide a process for economical slicing and washing of potatoes preparatory to frying which is efficient in the use of equipment and time and labor saving.

Additional objects and features of the invention will be readily understood and appear below in the drawings and description of a preferred embodiment of our invention.

### BRIEF DESCRIPTION OF THE DRAWINGS

Fig. 1 is a perspective view from above showing a vegetable slicing and washing apparatus specifically adapted for practicing the process of the present invention;
Fig. 2 is a plan view of the vegetable slicing and washing apparatus shown in Fig. 1;
Fig. 3 is an elevation sectional view on an enlarged scale taken in the direction of the arrows 3-3 of Fig 2;
Fig. 4 is a perspective view on an enlarged scale of the stator and rotor cage of the vegetable slicer shown in Fig. 3;
Fig. 5 is a plan view from above on a reduced scale of the stator and rotor cage assembly shown in Fig. 4; and
Fig. 6 is an elevation view of the stator and rotor cage assembly shown in Fig. 5.

### DESCRIPTION OF THE PREFERRED FORM OF THE INVENTION

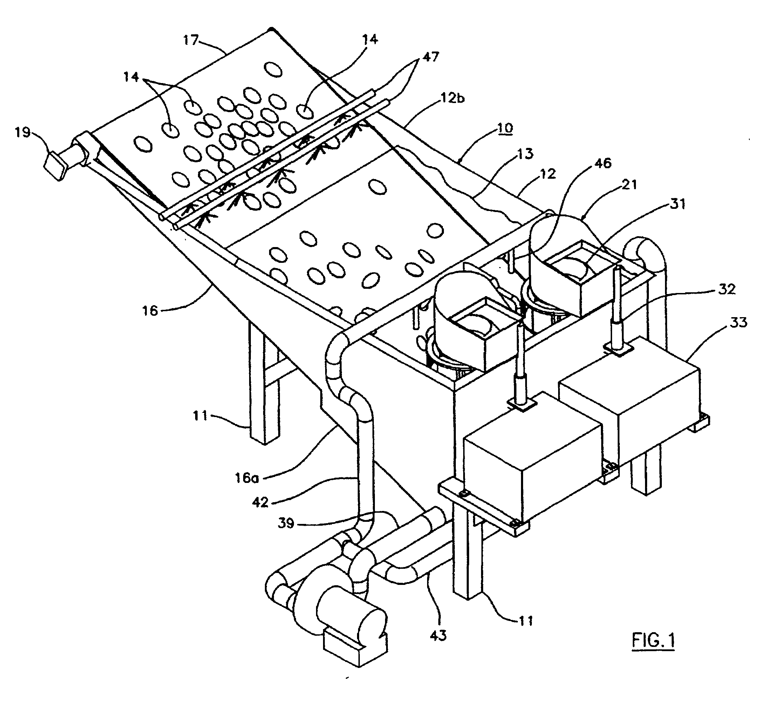

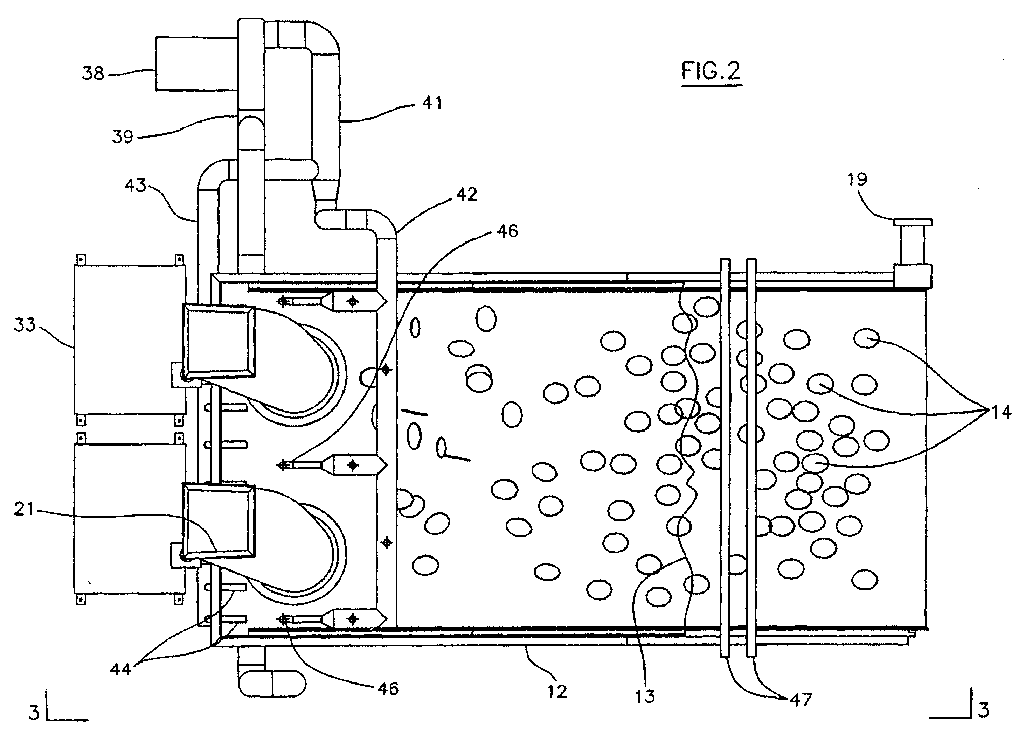

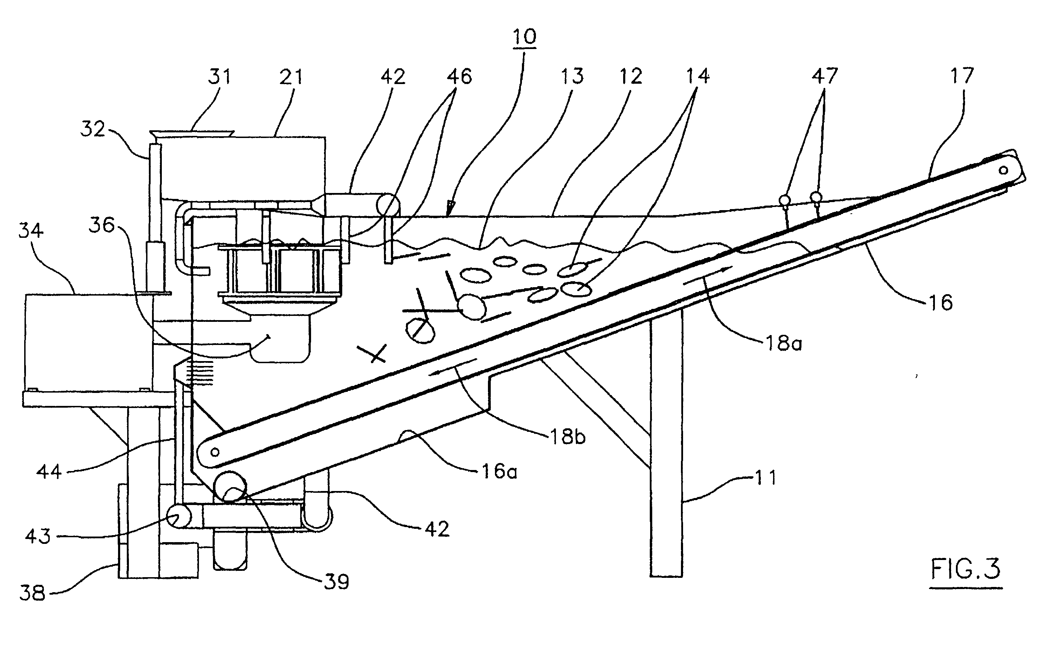

Referring to the drawings, Figs. 1-3, there is shown an apparatus 10 especially adapted for carrying out the principles of the invention in simultaneously slicing and washing a vegetable product. The vegetable product may be any from the group comprising potatoes, apples, sweet potatoes, cassava, plantains, beets, onions, water chestnuts, cabbage, carrots, turnips and sugar beets. The slicer-washer apparatus 10 includes an upstanding frame 11 which supports a metal tub or bath 12 which is generally wedge-shaped in elevation as seen in Fig. 3 and, as shown in plan view in Fig. 2, is generally rectilinear. An important function of the tub 12 is to contain a body of water 13 as indicated by the wavy lines of Figs. 1 and 3. The purpose of the water is to serve as a medium for washing broken cells, starch particles, dirt and the like from a multiplicity of vegetable slices 14 as symbolized by the oval elements in Figs. 1-3.

A bottom wall 16 of the tub 12 is inclined upwardly as clearly shown in Figs. 1 and 3. A sliced product take-out conveyor 17 is operatively mounted in the slicer-washer apparatus 10 to extend substantially the full length of the bottom wall 16 of the tub 12. The conveyor 17 is inclined so as to present an upper end of the conveyor to project above the side walls 12a, 12b of the tub. The conveyor 17 may receive vegetable slices 14 in the water bath 13 and will convey them in the direction of the arrows 18a upwardly and out of the water 13 to a take-away conveyor (not shown). The conveyor 17 is driven by a variable speed electric motor drive 19 so that the motion of the top conveyor runt is in the direction of the arrow 18a and the return run of the conveyor moves in the direction of the arrow 18b, shown in Fig. 3. The product take-out conveyor 17 is equipped with a belt composed of a woven wire mesh thus having substantial openings permitting a current of water to flow there through. The water circulation pattern will to be described more fully below.

A pair of powered vegetable slicer apparatus 21 may be operatively mounted at one end of the tub 12 in a manner so as to present the operative slicing mechanism or cutting head 22 submerged in the body of water 13 contained in the tub, as appears in Fig. 3. Although in the drawings of this disclosure, two vegetable slicers 21 are shown, the number may vary as conditions warrant. A single slicer may be appropriate for applications of modest capacity while 2, 3 or more slicers 21 may be appropriate for applications wherein a larger volume of sliced vegetable product is required.

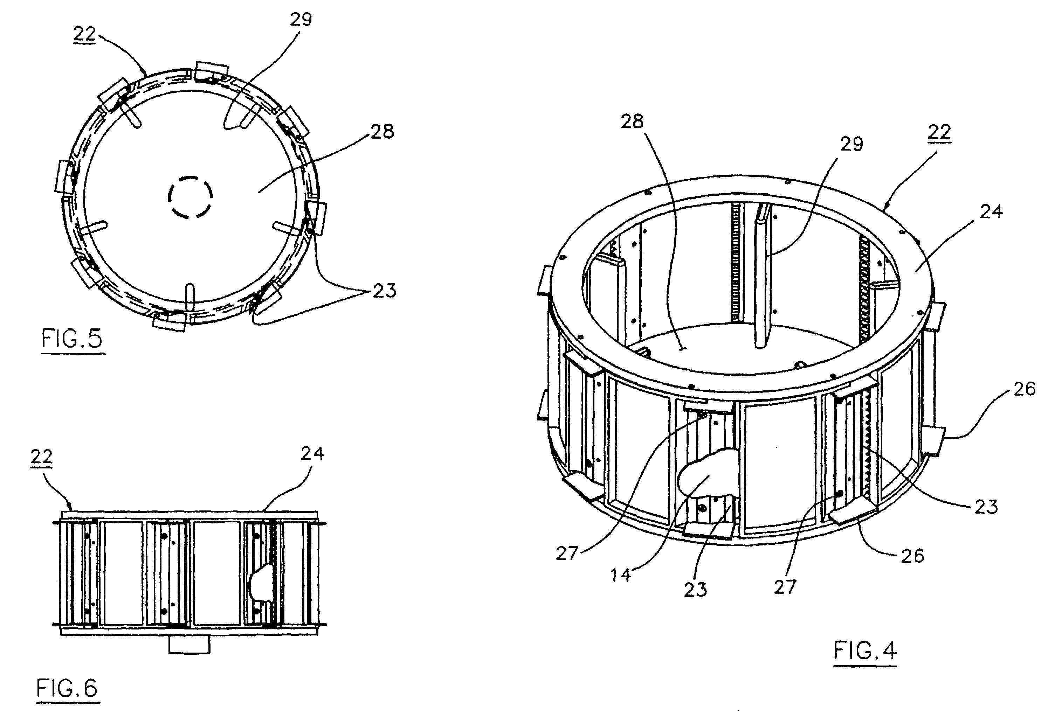

A rotary slicer found quite suitable for the present application is Model CC, manufactured by Urschel Laboratories, Inc. of Valparaiso, IN 46384. To permit effective operation of the rotary slicer Model CC within the principles of the present invention, we have made certain desirable modifications. More specifically, the slicer cutting head 22 is totally exposed in the body of water 13 so that the resulting slices 14 will be unimpeded by product deflecting guards or the like. This is achieved by removal of the covers and guards which are normally mounted upon the slicer so as to protect users from contacting the cutting head and also for the purpose of directing downwardly the sliced products in the normal operation of the slicer 21. Referring to Figs. 4-6, the cutting head 22 is equipped with a plurality of knives 23, circumferentially spaced apart with respect to a support ring 24. The individual knives 23 are held in the assembly by a knife clamp 26. Provisions are made on the cutting head 22 so as to insure that the slices 14 which exit through the cutting slots will do so in a substantially unobstructed manner to minimize deformations or bruising of the slices. More particularly, the various, normally protruding metal surfaces such as the fasteners 27 or flanges and the like are either removed or counter-sunk to a degree so that no metal obstruction will protrude into the path of the slice 14. For this reason the slice 14 will exit the cutting head 22 in a clean and undamaged state. In the condition when the guards are in place, as is the case where the slicer is usually operated in the "dry," the presence of the various protruding elements and fasteners is not critical. Evidentially the slice free falls through the air in a manner that avoids noticeable damaging to the sliced product. When slicing vegetables submerged in water, the opposite is true and for this reason steps are taken to provide a clear unimpeded path for the slice to emerge from the knife slot and to free fall into the surrounding water bath. This provision minimizes unacceptable damage to the slices.

It should be understood that the cutting head of the vegetable slicer comprises a stator which serves as a mounting frame for the fixed knives 23. A motor driven rotor cage 28 is mounted for rotation within the stator, the rotor cage being equipped with spaced-apart, vertically extending flights 29. These flights, arranged along the perimeter of the rotor cage, serve to engage with and drive the vegetable products with a centrifugal force with the result that the potatoes, for example, are urged into the slicing action against the fixed knives 23. The slice taken from the body of the vegetable is pushed through the knife slot and free falls into the surrounding body of water. The remainder of potato still within the rotor cage of the slicer continues in centrifugal motion and engages another stationary knife mounted in the stator whence another slice is removed from the potato to free fall into the surrounding body of water. In this action it will be apparent that the vegetables are directly and forcefully simultaneously sliced and washed immediately upon exit from the knife slots in the cutting head 22. The rotor cage 28 operates submerged in the water bath and thereby generates some turbulence which may sometimes resemble a vortex-like current of water flow which will be discussed below.

Referring again to Figs. 1 and 3, each slicer 21 is equipped with a feed hopper 31 into which the whole potatoes or other vegetables are deposited. The feed hopper 31 is supported by a vertically extending post 32 arranged on a box-like support 33 which serves as an enclosure for the variable speed motor drive (not shown). The motor drive unit in the slicer includes a gear reduction unit and a shaft which extends horizontally through a housing 36 (Fig. 3) and couples to a shaft for driving the rotor 28 of the cutting head 22. Thus it will be understood that in the intended operation the vegetable product is fed continuously into the slicer 21 though the feed hopper 31. The product descends by gravity into the cutting head 22 positioned in the water bath. There the vegetable product is forced centrifugally by the flights 29 of the rotor and driven into the stationary knives serving to cut the vegetable progressively into individual slices 14 in the presence of water. The slices issue immediately from the cutting head 22 and free fall into the surrounding water 13 and are thus washed on all surfaces. The slices 14 in their fall from the cutting head pass downwardly in the water and finally migrate onto the take-up conveyor 17. Control of water in the bath is maintained so as insure that substantially all of the slices take a path so as arrive onto the takeout conveyor. Through this action very few slices are "trapped" in back eddies for long periods in the tub during the slicing and washing operation.

A continuous, low velocity flow of water may preferably be maintained in the slicer/washer 10 to achieve a number of desired objectives. First, it is desirable to urge the slices to disperse into a somewhat broad pattern for their resulting placement onto the product conveyor 17. This is to minimize stacking of slices one upon the other when they come to rest on the conveyor. Second, water flow may be directed from jets nozzles discharging into the bath in at plurality of locations and directions; for example, in the vertical and horizontal general directions. Also, stator vanes may be positioned at various attitudes in the bath to control the eddies. This is to overcome and counteract to a degree the vortex- like or turbulent effects in the water created by the operating action of the rotary slicer 21. We recognize that it is highly desirable to prevent the vegetable slices from stagnating in the bath from being trapped in back eddies or in the vortex like turbulence. By these steps we control the turbulence at least to the degree that substantially all of the vegetable slices come to reside rather quickly on the conveyor. Third, the constant water circulation serves to insure that vegetable particles or other debris carried into the bath will migrate into the sump 16a arranged in the bottom wall 16. The purpose is to removed these materials continuously from the system so as to maintain a relatively clean washing medium.

Referring particularly to Figs. 1-3, the water circulation circuit or pattern includes a motor-driven centrifugal pump 38 which is arranged in the water flow circuit which includes a suction line 39. This is arranged in communication with the sump 16a (for fines removal) and the current or water flow is generally downwardly into the sump so as to create a current which passes through the wire mesh conveyor belt of the conveyor 17. The slices are urged by this current towards the belt. The output of the pump 38 is delivered into a main feed line 41 which branches into an upper feed line 42 and a lower feed line 43, best shown in Fig. 1. A plurality of risers and jet nozzles 44 are coupled to the lower feed line 43, the nozzles projecting generally horizontally into the tub 12 for discharging streams of water below the rotary slicer 21. The discharge nozzles 44 are disposed to project streams of water at controllable velocities into the general zones where vortex like turbulence is encountered by the slices. The water currents from the nozzles creates a flow pattern which counters the back eddies and encourages the slices to be better distributed upon the takeout conveyor belt. Four such nozzles 44 are illustrated in Fig. 2, but the number of the nozzles and their positions may vary depending upon the energy needed to disrupt the back eddies or other turbulence which tend to trap slices.

Similarly, the upper feed line 42 is equipped with jet nozzles 46 projecting generally vertically downwardly into the body of water in which the slices are washed. The vertical nozzles 46 are disposed to project streams of water at controllable rates into the general zones where the slices tend to be entrapped whether from the turbulence generated by the rotary slicer or from various flow effects within tank. Stator vanes may be positioned in the tank to supplement the effects of the nozzles 44,46 and in certain instances the stator vanes may be sufficient in themselves to control the water currents and materially reduce the tendency of slices to become trapped in back eddies or dead water.

In processing plants having a standing supply of compress air or of an inert gas supply it may be practical to substitute for the plurality of water jets disclosed above a generally similar array of gas or air jets for the purpose of urging the slices onto the takeout conveyor and to discourage the slices from, a long residence such as being trapped in a dead water zone of the water bath.

As the slices are removed from the tub on the conveyor 17, they may receive a final cleaning spray from the transverse spray system 47 arranged adjacent to the discharge end of the conveyor 17 as shown in Figs. 1-3, although this is not required in all instances. Thus, vegetable products such as potatoes having been deposited into the slicer 21 are sliced and simultaneously washed in an action wherein the slices are propelled outwardly from the slicer head into the body of water and are there stirred or mixed by the jets flowing from the nozzles 44, 46 so as to be disbursed over the conveyor belt 17 upon which they are removed from the slicer/washer 10. Immediately prior to the discharge from the conveyor 17, the slices receive a finishing spray 47 to remove any residual particles from the slice surfaces prior to further processing which includes frying or baking in apparatus well-known in the field.

While the method for simultaneously slicing and washing vegetables has been described above in connection with the preferred apparatus 10 for carrying out the invention, we do not intend to limit the practice of the invention to the particular apparatus disclosed herein, but on the contrary, it is intended to cover the various alternatives, modifications and equivalent steps as may be included within the scope of the invention as defined in the appended claims.

## Claims

1. A process for simultaneously slicing and washing a relatively firm, raw vegetable or fruit food product, the steps comprising:
providing a batch of the food product for slicing;
delivering the vegetable to a centrifugal-type slicer having a rotatable cage positioned radially inwardly of a fixed array of product slicing knives;
providing a body of water to serve as a water bath and immersing the slicer therein such that the rotary cage and knifes are underwater;
rotating the slicer cage with the vegetable product therein to force the food product through the knives and thence into the water bath, the slices being impelled through the water at velocity sufficient to simultaneously slice and wash starch and broken cell particles from the surfaces of the slices, and
removing the slices from the water for further processing.

2. The process according to claim 1 wherein the batch of food product consists of potatoes.

3. The process according to claim 1 where the batch of food product is one from the group consisting of apples, sweet potatoes, cassava, plantains, beets, onions, water chestnuts, cabbage, carrots, turnips and sugar beets.

4. The process according to claim 1 and providing means for removing the slices from the water and wherein said slicer cage, when operatively rotating in the body of water, generates a vortex in the water tending to entrap the slices therein and further including the step of directing the slices away from the vortex and towards the product removing means.

5. The process according to claim 4 wherein submerged jets of water direct the slices away from the vortex towards the product removing means.

6. The process according to claim 4 wherein submerged compressed air jets direct the slices away from the vortex towards the product removing means.

7. The process according to claim 1 wherein said slicer cage generates a vortex in the body of water tending to entrap the slices therein and further including the step of projecting submerged jets of compressed air adjacent to the vortex to encourage the slices to migrate towards product removal from the body of water.

8. The process according to claim 1 wherein the food product is centrifugally forced from the rotary cage through the knives at a plurality of arcuately spaced locations on the slicer.

9. The process according to claim 4 and removing the slices from the body of water along an upwardly inclined path into the air and wherein the submerged water jets are projected substantially in the direction of the path of slice removal.

10. The process according to claim 4 wherein the submerged water jets are oriented to project a stream of water in a direction substantially normal to the rotor rotational axis.

11. The process according to claim 4 wherein the submerged water jets are oriented to project a stream of water in a direction substantially parallel to the rotor rotational axis.

12. The process according to claim 4 wherein the submerged water jets are oriented to project a stream of water in a direction tangential to the rotor periphery.

13. A process of simultaneously washing and slicing a raw potato, the steps comprising:
furnishing a vat supplied with washing water and having an inclined takeout conveyor positioned with its lower end submerged in the water and its upper end extending above the water surface,
arranging a potato slicer with its potato supply inlet above the water surface and its potato slice discharge outlet positioned above the lower end of the takeout conveyor and below the water surface,
supplying potatoes to the slicer above water potato supply inlet while operating the slicer causing potato slices to be discharged underwater thereby directly and forcefully cleaning the surfaces of the slices of dirt, starch and burst potato cells,
circulating the washing water in a current passing downwardly through the conveyor at a force such that the potato slices are attracted to and dispersed upon the conveyor,
operating the conveyor in a direction to remove the slices from the water and the vat.

14. The process of claim 13 wherein operation of the potato slicer generates an underwater vortex tending to entrain slices therein, and controlling the vortex by impinging jets of fluid against the vortex to dislodge from the vortex the entrained slices serving to encourage the slices to disperse and lodge upon the takeout conveyor.

15. The process of claim 13 and providing jets of water circulating in the vat.

16. The process of claim 13 and providing fluid jets of an inert gas circulating in the vat.

## Patentansprüche

1. Verfahren zum gleichzeitigen Schneiden und Waschen eines relativ festen, rohen Gemüse- oder Obstnahrungsmittelprodukts, bei dem man
eine Ladung des Nahrungsmittelprodukts zum Schneiden bereitstellt,
das Gemüse einer zentrifugenartigen Schneidevorrichtung mit einem drehbaren Käfig, der von einer Produktschneidemesseranordnung radial nach innen positioniert ist, zuliefert,
Wasser bereitstellt, das als Wasserbad dient, und die Schneidevorrichtung so darin eintaucht, dass der Drehkäfig und die Messer unter Wasser sind,
den Schneidevorrichtungskäfig mit dem darin befindlichen Gemüseprodukt dreht, um das Nahrungsmittelprodukt durch die Messer und dann in das Wasserbad zu zwingen, wobei die Scheiben so schnell durch das Wasser getrieben werden, dass Stärke und Zellenpartikelreste von den Scheibenoberflächen getrennt und gewaschen werden, und die Scheiben zur Weiterverarbeitung aus dem Wasser entfernt.

2. Verfahren nach Anspruch 1, bei dem die Nahrungsmittelproduktladung aus Kartoffeln besteht.

3. Verfahren nach Anspruch 1, bei dem die Nahrungsmittelproduktladung zu der Gruppe gehört, die aus Äpfeln, Süßkartoffeln, Maniok, Kochbananen, Runkelrüben, Zwiebeln, Wassernüssen, Kohl, Karotten, Rüben und Zuckerrüben besteht.

4. Verfahren nach Anspruch 1 und Bereitstellung eines Mittels zum Entfernen der Scheiben aus dem Wasser, wobei der Schneidevorrichtungskäfig, wenn er sich betriebsmäßig im Wasser dreht, einen Wirbel im Wasser erzeugt, der dazu neigt, die Scheiben einzufangen, und bei dem man weiterhin die Scheiben vom Wirbel weg- und zu dem Produktentfernungsmittel hinleitet.

5. Verfahren nach Anspruch 4, bei dem unter Wasser befindliche Wasserstrahlen die Scheiben vom Wirbel weg- und zu dem Produktentfernungsmittel hinleiten.

6. Verfahren nach Anspruch 4, bei dem unter Wasser befindliche Druckluftstrahlen die Scheiben vom Wirbel weg- und zu dem Produktentfernungsmittel hinleiten.

7. Verfahren nach Anspruch 1, bei dem durch den Schneidevorrichtungskäfig im Wasser ein Wirbel erzeugt wird, der dazu neigt, die Scheiben einzufangen, und bei dem man weiterhin unter Wasser befindliche Druckluftstrahlen in die Nähe des Wirbels projiziert, um zu bewirken, dass sich die Scheiben zur Produktentfernung aus dem Wasser bewegen.

8. Verfahren nach Anspruch 1, bei dem das Nahrungsmittelprodukt an mehreren bogenförmig beabstandeten Stellen an der Schneidevorrichtung zentrifugal aus dem Drehkäfig und durch die Messer gezwungen wird.

9. Verfahren nach Anspruch 4 und Entfernen der Scheiben auf einer nach oben geneigten Bahn aus dem Wasser in die Luft, wobei die unter Wasser befindlichen Wasserstrahlen im Wesentlichen in die Richtung der Bahn, auf der die Scheiben entfernt werden, projiziert werden.

10. Verfahren nach Anspruch 4, bei dem die unter Wasser befindlichen Wasserstrahlen so ausgerichtet sind, dass sie einen Wasserstrom in eine Richtung projizieren, die im Wesentlichen lotrecht zur Rotordrehachse verläuft.

11. Verfahren nach Anspruch 4, bei dem die unter Wasser befindlichen Wasserstrahlen so ausgerichtet sind, dass sie einen Wasserstrom in eine Richtung projizieren, die im Wesentlichen parallel zur Rotordrehachse verläuft.

12. Verfahren nach Anspruch 4, bei dem die unter Wasser befindlichen Wasserstrahlen so ausgerichtet sind, dass sie einen Wasserstrom in eine zum Rotorumfang tangentiale Richtung projizieren.

13. Verfahren zum gleichzeitigen Waschen und Schneiden einer rohen Kartoffel, bei dem man
einen Bottich bereitstellt, der mit Waschwasser versorgt wird und einen geneigten Ausgabeförderer aufweist, der so angeordnet ist, dass sein unteres Ende im Wasser eingetaucht ist und sich sein oberes Ende über der Wasseroberfläche erstreckt,
eine Kartoffelschneidevorrichtung so anordnet, dass ihr Kartoffelzufuhreinlass über der Wasseroberfläche liegt und ihr Kartoffelscheibenabfuhrauslass über dem unteren Ende des Ausgabeförderers und unter der Wasseroberfläche positioniert ist,
Kartoffeln während des Betriebs der Schneidevorrichtung zu dem über der Wasseroberfläche liegenden Kartoffelzufuhreinlass der Schneidevorrichtung liefert, wodurch Kartoffelscheiben unter Wasser ausgegeben werden, wodurch die Oberflächen der Scheiben direkt und gründlich von Schmutz, Stärke und Kartoffelzellenresten gereinigt werden,
das Waschwasser in einer nach unten durch den Förderer gehenden Strömung so stark zirkuliert, dass die Kartoffelscheiben vom Förderer angezogen und auf diesem verteilt werden, und
den Förderer in einer solchen Richtung betreibt, dass die Scheiben aus dem Wasser und dem Bottich entfernt werden.

14. Verfahren nach Anspruch 13, bei dem durch den Betrieb der Kartoffelschneidevorrichtung ein Unterwasserwirbel erzeugt wird, der dazu neigt, die Scheiben mitzureißen, wobei man den Wirbel dadurch steuert, dass dieser mit Fluidstrahlen beaufschlagt wird, so dass die mitgerissenen Scheiben aus dem Wirbel entfernt werden, was die Scheiben dazu veranlassen soll, sich zu verteilen und auf dem Ausgabeförderer zu positionieren.

15. Verfahren nach Anspruch 13 und Bereitstellung von Wasserstrahlen, die im Bottich zirkulieren.

16. Verfahren nach Anspruch 13 und Bereitstellung von Fluidstrahlen aus einem Inertgas, die im Bottich zirkulieren.

## Revendications

1. Procédé pour trancher et laver simultanément un produit alimentaire cru de type légume ou fruit relativement ferme, dont les étapes consistent à:
- fournir un lot de produit alimentaire à trancher;
- conduire le légume jusqu'à une trancheuse du type centrifugeuse comportant une cage rotative positionnée radialement vers l'intérieur d'un arrangement fixe de couteaux de tranchage de produit;
- prévoir un volume d'eau qui sert de bain d'eau et immerger la trancheuse dans celui-ci de telle sorte que la cage rotative et les couteaux soient sous l'eau;
- faire tourner la cage de la trancheuse avec un produit de légume à l'intérieur de celle-ci afin de forcer le produit alimentaire à passer à travers les couteaux et par conséquent dans le bain d'eau, les tranches étant propulsées à travers l'eau à une vitesse suffisante pour simultanément trancher et laver la fécule et les particules de cellules brisées de la surface des tranches, et
- retirer les tranches hors de l'eau en vue d'un traitement ultérieur.

2. Procédé selon la revendication 1, dans lequel le lot de produit alimentaire est constitué de pommes de terre:

3. Procédé selon la revendication 1, dans lequel le lot de produit alimentaire est issu du groupe composé des pommes, des patates douces, du manioc, des plantains, des betteraves, des oignons, des châtaignes d'eau, des choux, des carottes, des navets et des betteraves sucrières.

4. Procédé selon la revendication 1, comprenant en outre des moyens permettant de retirer les tranches hors de l'eau et dans lequel ladite cage de la trancheuse, lorsqu'elle tourne d'une façon opérationnelle dans le volume d'eau, génère un tourbillon dans l'eau qui a tendance à emprisonner les tranches, et comprenant en outre l'étape qui consiste à éloigner les tranches du tourbillon et à les diriger vers les moyens d'enlèvement du produit.

5. Procédé selon la revendication 4, dans lequel des jets d'eau submergés éloignent les tranches du tourbillon en. direction des moyens d'enlèvement du produit.

6. Procédé selon la revendication 4, dans lequel des jets d'air comprimé submergés éloignent les tranches du tourbillon en direction des moyens d'enlèvement du produit.

7. Procédé selon la revendication 1, dans lequel ladite cage de la trancheuse génère un tourbillon dans le volume d'eau qui a tendance à emprisonner les tranches, et comprenant en outre l'étape qui consiste à projeter des jets d'air comprimé submergés à proximité du tourbillon afin de favoriser le déplacement des tranches en direction des moyens d'enlèvement du produit hors du volume d'eau.

8. Procédé selon la revendication 1, dans lequel le produit alimentaire est forcé d'une façon centrifuge à partir de la cage rotative à passer à travers les couteaux en une pluralité d'endroits espacés en arc sur la trancheuse.

9. Procédé selon la revendication 4, et comprenant en outre l'enlèvement des tranches hors du volume d'eau le long d'un chemin incliné vers le haut dans l'air, et dans lequel les jets d'eau submergés sont projetés substantiellement dans la direction du chemin d'enlèvement des tranches.

10. Procédé selon la revendication 4, dans lequel les jets d'eau submergés sont orientés de manière à projeter un courant d'eau dans une direction substantiellement perpendiculaire à l'axe de rotation du rotor.

11. Procédé selon la revendication 4, dans lequel les jets d'eau submergés sont orientés de manière à projeter un courant d'eau dans une direction substantiellement parallèle à l'axe de rotation du rotor.

12. Procédé selon la revendication 4, dans lequel les jets d'eau submergés sont orientés de manière à projeter un courant d'eau dans une direction tangentielle à la périphérie du rotor.

13. Procédé pour laver et trancher simultanément des pommes de terre crues, comprenant les étapes consistant à:
- fournir une cuve remplie d'eau de lavage et comportant un convoyeur de sortie incliné positionné de telle façon que son extrémité inférieure est submergée dans l'eau et et que son extrémité supérieure s'étend au-dessus de la surface de l'eau;
- arranger une trancheuse de pommes de terre de manière à ce que son orifice d'entrée des pommes de terre se trouve au-dessus de la surface de l'eau, et que son orifice de sortie de tranches de pommes de terre soit positionné au-dessus de l'extrémité inférieure du convoyeur de sortie et en dessous de la surface de l'eau;
- amener des pommés de terre jusqu'à l'orifice d'entrée de pommes de terre situé au-dessus de l'eau de la trancheuse tout en actionnant la trancheuse, entraînant les tranches de pommes de terre à être déchargées sous l'eau, lavant de ce fait directement et énergiquement les surfaces de tranches en les débarrassant de toute saleté, de toute fécule et de toute cellule de pomme de terre éclatée,
- faisant circuler l'eau de lavage dans un courant passant vers le bas à travers le convoyeur à une force telle que les tranches de pommes de terre soient attirées vers et dispersées sur le convoyeur;
- faire fonctionner le convoyeur dans une direction qui permet d'enlever les tranches hors de l'eau et de la cuve.

14. Procédé selon la revendication 13, dans lequel le fonctionnement de la trancheuse de pommes de terre génère un tourbillon sous l'eau qui a tendance à emprisonner les tranches, et dans lequel on commande le tourbillon en projetant des jets de fluide contre le tourbillon afin de déloger les tranches emprisonnées hors du tourbillon afin de favoriser la dispersion des tranches et leur positionnement sur le convoyeur de sortie.

15. Procédé selon la revendication 13, et prévoyant en outre des jets d'eau circulant dans la cuve.

16. Procédé selon la revendication 13, et prévoyant en outre des jets de fluide d'un gaz inerte circulant dans la cuve.
